(19) 

Europäisches
Patentamt
European
Patent Office
Office européen
des brevets

(11) **EP 4 328 789 A1**

(12) **EUROPEAN PATENT APPLICATION**
published in accordance with Art. 153(4) EPC

(43) Date of publication:
**28.02.2024   Bulletin 2024/09**

(21) Application number: **23801282.7**

(22) Date of filing: **04.05.2023**

(51) International Patent Classification (IPC):
**G06F 30/20** *(2020.01)*

(86) International application number:
**PCT/CN2023/091983**

(87) International publication number:
**WO 2023/246319 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **21.06.2022   CN 202210700956**

(71) Applicant: **Honor Device Co., Ltd.
Shenzhen, Guangdong 518040 (CN)**

(72) Inventors:
• **XIN, Daiping
  Shenzhen, Guangdong 518040 (CN)**
• **REN, Chao
  Shenzhen, Guangdong 518040 (CN)**

(74) Representative: **Isarpatent
Patent- und Rechtsanwälte
Barth Hassa Peckmann & Partner mbB
Friedrichstraße 31
80801 München (DE)**

(54) **ASSEMBLY VERIFICATION METHOD AND ELECTRONIC DEVICE**

(57)     Embodiments of this application provide an assembly verification method and an electronic device, and are applied to the field of computer technologies. The method includes: determining coordinates of a high-risk assembly position of each test point in a to-be-mounted component when the to-be-mounted component and a mounted component are assembled; determining, based on a three-dimensional tolerance dimension chain and the coordinates of a high-risk assembly position of each test point, a gap value distribution interval when the to-be-mounted component and the mounted component are assembled; and determining, based on the gap value distribution interval, whether there is an interference when the to-be-mounted component and the mounted component are assembled. Therefore, at a product design stage, it may be predicted whether there is the interference when the to-be-mounted component and the mounted component are assembled in a virtual assembly verification method, instead of a physical verification method, shortening a product design return cycle, and reducing manpower and material costs.

FIG. 3

# Description

This application claims priority to Chinese Patent Application No. 202210700956.7, filed with the China National Intellectual Property Administration on June 21, 2022 and entitled "ASSEMBLY VERIFICATION METHOD AND ELECTRONIC DEVICE", which is incorporated herein by reference in its entirety.

## TECHNICAL FIELD

This application relates to the field of computer technologies, and in particular to an assembly verification method and an electronic device.

## BACKGROUND

As information technologies continuously develop, mobile phones, tablet computers, and other terminal devices have become common tools in people's life and work. At present, most terminal devices are provided with front cameras and implement image capturing based on the front cameras.

In a process of manufacturing of the terminal device, a hole may be opened in a screen of the terminal device, and the front camera may be assembled in a mounting hole formed in the screen. To increase a screen-to-body ratio of the terminal device, a gap between the front camera and the screen may be reduced.

However, if the gap between the front camera and the screen is designed to be small, when the front camera is assembled in the mounting hole, scratching may easily occur between the front camera and the screen.

## SUMMARY

Embodiments of this application provide an assembly verification method and an electronic device. It may be predicted whether there is an interference between a to-be-mounted component and a mounted component in a computer simulation and virtual verification manner, reducing manpower and material costs, and shortening a product design return cycle.

According to a first aspect, an embodiment of this application provides an assembly verification method. The method is applied to an electronic device, and includes: The electronic device obtains a three-dimensional tolerance dimension chain of a to-be-mounted component and a mounted component; the electronic device determines coordinates of a high-risk assembly position of each test point in the to-be-mounted component when the to-be-mounted component and the mounted component are assembled; the electronic device determines, based on the three-dimensional tolerance dimension chain and the coordinates of a high-risk assembly position of each test point in the to-be-mounted component, a gap value distribution interval when the to-be-mounted component and the mounted component are assembled; and the electronic device determines, based on the gap value distribution interval, whether there is an interference when the to-be-mounted component and the mounted component are assembled.

In this way, at a product design stage, it may be predicted whether there is the interference when the to-be-mounted component and the mounted component are assembled at a mass production stage in a virtual assembly verification method, instead of a physical verification method. Therefore, while it is predicted that there may be the interference when the to-be-mounted component and the mounted component are assembled at the mass production stage, an interference caused by an unreasonable design may be intercepted by taking corresponding strategies. This greatly shortens a product design return cycle, and reduces manpower and material costs.

In a possible implementation, that the electronic device determines coordinates of a high-risk assembly position of each test point in the to-be-mounted component when the to-be-mounted component and the mounted component are assembled includes: The electronic device calculates a minimum nominal gap value between each test point in the mounted component and the mounted component when the to-be-mounted component and the mounted component are assembled; and the electronic device determines the coordinates of a high-risk assembly position of the test point based on the minimum nominal gap value. In this way, the coordinates of a high-risk assembly position of the test point may be easily determined based on the minimum nominal gap value between each test point and the mounted component.

In a possible implementation, that the electronic device calculates a minimum nominal gap value between each test point in the to-be-mounted component and the mounted component when the to-be-mounted component and the mounted component are assembled includes: The electronic device determines a first coordinate value of the test point in a first direction and a second coordinate value of the test point in a second direction when the to-be-mounted component and the mounted component are assembled; the electronic device detects a third coordinate value of the test point in a third direction at a different tilt angle when the to-be-mounted component rotates; the electronic device determines a nominal gap value between the test point at the different tilt angle and the mounted component based on the first coordinate value, the second coordinate value, and the third coordinate value; and the electronic device determines a minimum value of the nominal gap value of the test point at the different tilt angle as a minimum nominal gap value between the test point and the mounted component. In this way, the nominal gap value between the test point at the different tilt angle and the mounted component may be obtained by simulating rotation of the to-be-mounted component. Therefore, a manual assembly angle when the to-be-mounted component and the mounted component are assembled may be covered, to well simulate an assembly operation when the to-be-mounted component and the mounted component are assembled. Subsequently, when the coordinates of a high-risk assembly position is determined based on the minimum nominal gap value, and the gap value distribution interval when the to-be-mounted component and the mounted component are assembled is determined based on the coordinates of a high-risk assembly position, influence factors of an actual manual assembly operation on a gap value obtained when the to-be-mounted component and the mounted component are assembled may be considered, to more accurately predict whether there is the interference when the to-be-mounted component and the mounted component are assembled.

In a possible implementation, the electronic device determines a nominal gap value between the test point at the different tilt angle and the mounted component based on the first coordinate value, the second coordinate value, and the third coordinate value includes: The electronic device determines, based on the first coordinate value, the second coordinate value, and the third coordinate value, a first projection gap in the first direction, a second projection gap in the second direction, and a third projection gap in the third direction, between the test point at the different tilt angle and the mounted component; and the electronic device calculates a square root of a sum of squares of the first projection gap, the second projection gap, and the third projection gap, to obtain the nominal gap value between the test point at the different tilt angle and the mounted component. In this way, the nominal gap value between the test point and the mounted component may be calculated based on the projection gaps in the three coordinate directions. Therefore, the nominal gap value obtained by calculation is more accurate.

In a possible implementation, that the electronic device determines the coordinates of a high-risk assembly position of the test point based on the minimum nominal gap value includes: The electronic device determines the coordinates of a high-risk assembly position of the test point based on the first coordinate value, the second coordinate value, and a third coordinate value corresponding to the minimum nominal gap value. In this way, under a condition that the first coordinate value and the second coordinate value are fixed values, an assembly position corresponding to the minimum nominal gap value, that is, an assembly position with a highest interference risk at the test point when the to-be-mounted component and the mounted component are assembled. At the assembly position with a highest interference risk, if it is predicted that there is no interference when the to-be-mounted component and the mounted component are assembled, there is no interference at another assembly position.

In a possible implementation, that the electronic device determines, based on the three-dimensional tolerance dimension chain and the coordinates of a high-risk assembly position of each test point in the to-be-mounted component, a gap value distribution interval when the to-be-mounted component and the mounted component are assembled includes: The electronic device obtains a tolerance of a target constituent ring corresponding to each test point in the to-be-mounted component, where the target constituent ring is a constituent ring in a plurality of constituent rings included in the three-dimensional tolerance dimension chain; the electronic device generates a sampled data set of the constituent ring based on the coordinates of a high-risk assembly position of each test point and the tolerance of the target constituent ring; and the electronic device solves the three-dimensional tolerance dimension chain based on sampled data of the constituent ring obtained by sampling from the sampled data set of the constituent ring each time, to obtain the gap value distribution interval when the to-be-mounted component and the mounted component are assembled. In this way, it may be simulated, in manners of dynamic assembly simulation and coupling analysis of three-dimensional tolerance and under a common influence of the tolerance of the constituent ring and the manual assembly operation, whether there is the interference when the to-be-mounted component and the mounted component are assembled. This improves accuracy of interference simulation verification.

In a possible implementation, that the electronic device determines, based on the gap value distribution interval, whether there is the interference when the to-be-mounted component and the mounted component are assembled includes: The electronic device determines whether there is a gap value less than 0 in the gap value distribution interval; if there is the gap value less than 0 in the gap value distribution interval, the electronic device determines that there is the interference when the to-be-mounted component and the mounted component are assembled; or if there is no gap value less than 0 in the gap value distribution interval, the electronic device determines that there is no interference when the to-be-mounted component and the mounted component are assembled. In this way, by comparing the gap value distribution interval with 0, it may be determined whether there is the interference when the to-be-mounted component and the mounted component are assembled. This interference determination method is relatively simple.

In a possible implementation, after the electronic device determines, based on the gap value distribution interval, whether there is the interference when the to-be-mounted component and the mounted component are assembled, the method further includes: If there is the interference when the to-be-mounted component and the mounted component are assembled, the electronic device calculates contribution degrees of constituent rings in the three-dimensional tolerance dimension chain; and the electronic device adjusts a tolerance of the constituent ring in the three-dimensional tolerance dimension chain based on the contribution degree, until it is determined, based on an adjusted three-dimensional tolerance dimension chain and the coordinates of a high-risk assembly position, that there is no interference when the to-be-mounted component and the mounted component are assembled. In this way, while it is predicted that there may be the interference when the to-be-mounted component and the mounted component are assembled, the tolerance of the constituent ring in the three-dimensional tolerance dimension chain is optimized based on the contribution degree of the constituent ring in the three-dimensional tolerance dimension chain, until that a three-dimensional tolerance dimension chain with no interference when the to-be-mounted component and the mounted component are assembled is obtained by simulation, to further accelerate the product design return cycle.

In a possible implementation, that the electronic device calculates contribution degrees of constituent rings in the three-dimensional tolerance dimension chain includes: The electronic device calculates contribution degrees of constituent rings in the three-dimensional tolerance dimension chain in a first direction based on a calculation formula of a contribution degree below, where

$$Cx_i = \frac{\left(\frac{\partial U}{\partial x_i} \times \sigma_{x_i}\right)^2}{\sigma_u{}^2}$$

$Cx_i$ represents a contribution degree of an $i^{th}$ constituent ring in the first direction, $x_i$ represents the $i^{th}$ constituent ring in the first direction, U represents a closed ring in the three-dimensional tolerance dimension chain, where the closed ring is a gap formed when the to-be-mounted component and the mounted component are assembled, $\sigma_{x_i}$ represents a standard deviation of the $i^{th}$ constituent ring in the first direction, and $\sigma_u$ represents a standard deviation of the closed ring.

In a possible implementation, that the electronic device adjusts a tolerance of the constituent ring in the three-dimensional tolerance dimension chain based on the contribution degree includes: The electronic device adjusts, based on a sequence of contribution degrees of constituent rings in a same direction from high to low, a tolerance of at least one constituent ring ranking top in the three-dimensional tolerance dimension chain. In this way, based on an influence factor with a high contribution degree, a tolerance of a corresponding constituent ring in the three-dimensional tolerance dimension chain may be more accurately optimized. Therefore, a speed at which the three-dimensional tolerance dimension chain is obtained with no interference when the to-be-mounted component and the mounted component are assembled by simulation is accelerated.

In a possible implementation, after the electronic device adjusts a tolerance of the constituent ring in the three-dimensional tolerance dimension chain based on the contribution degree, until it is determined, based on an adjusted three-dimensional tolerance dimension chain and the coordinates of a high-risk assembly position, that there is no interference when the to-be-mounted component and the mounted component are assembled, the method further includes: The electronic device outputs tolerances of constituent rings in a finally adjusted three-dimensional tolerance dimension chain. In this way, by outputting the tolerances of the constituent rings in the finally adjusted three-dimensional tolerance dimension chain, personnel can be prompted to manage and control materials and devices according to corresponding management and control standards.

In a possible implementation, after the electronic device determines, based on the gap value distribution interval, whether there is the interference when the to-be-mounted component and the mounted component are assembled, the method further includes: If there is no interference when the to-be-mounted component and the mounted component are assembled, the electronic device outputs prompt information that tolerances of constituent rings in the three-dimensional tolerance dimension chain meet a requirement. In this way, the personnel may be prompted, by outputting the prompt information that the tolerances of the constituent rings in the three-dimensional tolerance dimension chain meet a requirement, that tolerances of the current constituent rings meet the requirement.

In a possible implementation, the to-be-mounted component is a front camera in a terminal device, and the mounted component is a screen in the terminal device.

According to a second aspect, an embodiment of this application provides an electronic device. The electronic device includes a memory and a processor, where the memory is configured to store a computer program, and the processor is configured to invoke the computer program to perform the foregoing assembly verification method.

According to a third aspect, an embodiment of this application provides a computer-readable storage medium, where the computer-readable storage medium stores a computer program or instructions, and when the computer program or the instructions are run, the foregoing assembly verification method is implemented.

Effects in various possible implementations of the second aspect and the third aspect are similar to effects of the first aspect and the possible designs of the first aspect, and details are not described herein again.

## BRIEF DESCRIPTION OF THE DRAWINGS

FIG. 1 is a schematic diagram of a structure of a front camera and a screen in a terminal device according to an embodiment of this application;
FIG. 2 is a schematic diagram of structures of a terminal device of which scratching does not occur between a front camera and a screen and a terminal

7 **EP 4 328 789 A1** 8

device of which scratching occurs between the front camera and the screen according to an embodiment of this application;

FIG. 3 is a flowchart of an assembly verification method according to an embodiment of this application;

FIG. 4 is a flowchart of calculating a gap value distribution interval in a Monte Carlo simulation method according to an embodiment of this application; and

FIG. 5 is a schematic diagram of a structure of an electronic device according to an embodiment of this application.

## DETAILED DESCRIPTION

To clearly describe technical solutions in embodiments of this application, terms such as "first" and "second" are used in embodiments of this application to distinguish between same items or similar items that provide basically same functions or purposes. For example, a first chip and a second chip are merely used to distinguish different chips, and are not intended to limit a sequence of the chips. Those skilled in the art may understand that the words "first", "second", and the like do not limit a quantity and an execution order, and the words "first", "second", and the like are not limited to be necessarily different.

It should be noted that the word "example", "for example", or the like in the embodiments of this application is used to indicate an example, an illustration, or a description. Any embodiment or design solution described as "example" or "for example" in this application should not be construed as being preferred or having more advantages than another embodiment or design scheme. In particular, the word such as "example" and "example" as used herein is intended to present the related concept in a specific implementation.

In embodiments of this application, "at least one" means one or more, and "a plurality" means two or more. "And/Or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between associated objects before and after the character. "At least one of the following items" or a similar expression thereof indicates any combination of these items, including a single item or any combination of a plurality of items. For example, at least one of a, b, or c may represent "a", "b", "c"," "a and b", "a and c", "b and c", or "a, b, and c", where a, b, and c may be singular or plural.

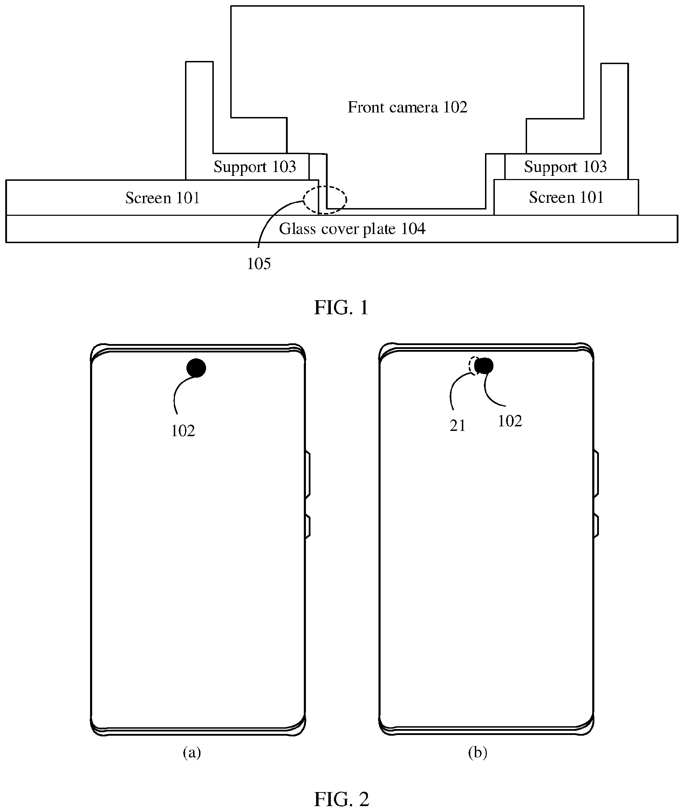

In some terminal devices, a front camera may be used to capture an image. As shown in FIG. 1, a terminal device 100 may include a screen 101, a front camera 102, supports 103, and a cover plate 104.

The screen 101 may be a liquid crystal display (liquid crystal display, LCD), an organic light-emitting diode (organic light-emitting diode, OLED) display, or the like. A mounting hole is opened in the screen 101, and the mounting hole is used to place a lens of the front camera 102. The supports 103 are fastened to the screen 101, and the front camera 102 is disposed on the support 103, to enable the lens of the front camera 102 to be located in the mounting hole. The cover plate 104 may be a glass cover plate and may be configured to protect the screen 101.

It may be understood that the terminal device 100 may further include other devices such as a middle frame, a printed circuit board (printed circuit board, PCB), and the like.

The terminal device 100 in this embodiment of this application may be a device that needs the front camera 102, such as a mobile phone, a tablet computer, an e-reader, a notebook computer, an in-vehicle device, a wearable device, a television, or the like. A hole is opened in the screen 101 of the terminal device 100, and the mounting hole formed in the screen 101 is used to place the front camera 102. There may be a plurality of front cameras 102 disposed in the terminal device 100, for example, two, three, or more. A quantity of front cameras 102 disposed in the terminal device 100 is not limited in this embodiment of this application.

To increase a screen-to-body ratio of the terminal device 100, when the terminal device 100 is manufactured, a difference between a dimension of the mounting hole in the screen 101 and a dimension of the front camera 102 is small. Therefore, a gap between the front camera 102 and the screen 101 is relatively small.

However, under a condition that the gap between the front camera 102 and the screen 101 is designed to be small, if a tolerance of the front camera 102 is improperly designed, or if there is an alignment deviation between the support 103 fastened to the screen 101 and the mounting hole, when the front camera 102 is assembled in the mounting hole, scratching may occur between an outer edge of the front camera 102 and the screen 101, resulting in a dark spot around the front camera 102. A position of scratching between the outer edge of the front camera 102 and the screen 101 may be a position at which a dashed circle 105 in FIG. 1 is located.

If the front camera 102 is assembled in the mounting hole, and no scratching occurs between the front camera 102 and the screen 101, after the screen of the terminal device as shown in (a) in FIG. 2 is on, it can be found that there is no dark spot around the front camera 102. If the front camera 102 is assembled in the mounting hole, and scratching occurs between the front camera 102 and the screen 101, after the screen of the terminal device as shown in (b) in FIG. 2 is on, it can be found that there is a dark spot 21 around the front camera 102. This affects aesthetics of the terminal device.

In a related technology, at an assembly and trial production stage of the whole terminal device, a verification method with an actual material in a limit condition may be used to verify whether scratching occurs between

5

the front camera and the screen in a process of assembling of the front camera.

Specifically, a front camera of a limit dimension (that is, a maximum dimension of the front camera allowed during design) and a mounting hole of a limit dimension (that is, a minimum dimension of the mounting hole allowed during design) may be selected, and the front camera may be manually assembled in the mounting hole, to verify whether scratching occurs between the front camera and the screen.

However, in this method for verifying whether scratching occurs between the front camera and the screen, the dark spot may be found around the front camera at the assembly and trial production stage of the whole terminal device, while at a mass production stage of the terminal device, there may be a specific proportion of dark spots around the front camera of the terminal device. It is found that at the mass production stage of the terminal device, there may be three ten-thousandths to four ten-thousandths of dark spots around the front camera of the terminal device.

At the assembly stage and trial production stage of the whole terminal device, an assembly operation of manually assembling the front camera in the mounting hole in the screen covers only a part of a manual assembly angle of the front camera during assembling, while at the mass production stage, a range of the manual assembly angle of the front camera during assembling is wide. Therefore, an assembly operation of the front camera at the assembly and trial production stage may not simulate an assembly operation of the front camera at the mass production stage. This may result in no dark spot found at the trial production stage but the specific proportion of dark spots found at the mass production stage.

In addition, because there is a specific tolerance while the front camera is manufactured, it is difficult to obtain the front camera of a limit dimension. When a front camera of which a dimension does not reach the limit dimension is assembled, it may also result in no dark spot found at the trial production stage but the specific proportion of dark spots found at the mass production stage.

Therefore, for the verification method with an actual material in a limit condition, because it is difficult to obtain the front camera of a limit dimension and accuracy of verification is low due to incomplete coverage by an assembly action when the front camera is manually assembled, dark spots are not found and intercepted in advance at the trial production stage. Therefore, a product design return cycle is affected, and a lot of manpower and material costs are required in the verification method.

Based on this, an embodiment of this application provides an assembly verification method. At a product design stage, by simulating an assembly action of manually assembling the front camera in the mounting hole in the screen, coordinates of a high-risk assembly position of each test point in the front camera is determined, a gap value distribution interval between the front camera and the screen when the front camera is assembled in the mounting hole in the screen may be determined based on a three-dimensional tolerance dimension chain and the coordinates of a high-risk assembly position of each test point. Therefore, it may be determined, based on the gap value distribution interval, whether there is an interference (may also be referred to as scratching) between the front camera and the screen when the front camera is assembled in the mounting hole in the screen. Therefore, in this embodiment of this application, it may be predicted whether scratching occurs between the front camera and the screen at the product design stage in a virtual assembly verification method, instead of a physical verification method. To be specific, it may be predicted whether there is the dark spot around the front camera. Therefore, when it is predicted that scratching may occur between the front camera and the screen, a corresponding strategy may be taken in a timely manner, to intercept scratching caused by an inappropriate design. This greatly shortens the product design return cycle, and reduces manpower and material costs.

In the assembly verification method in this embodiment of this application, in addition to performing virtual verification on a gap formed when the front camera and the screen are assembled, virtual verification may also be performed on a gap formed when a battery cover and a middle frame housing are assembled, and a gap formed when a rear camera and a circuit board are assembled.

If virtual verification is performed on the gap formed when the front camera and the screen are assembled in this embodiment of this application, a to-be-mounted component is the front camera in the terminal device, and a mounted component is the screen in the terminal device. If virtual verification is performed on the gap caused when the battery cover and the middle frame housing are assembled in this embodiment of this application, the to-be-mounted component is the battery cover in the terminal device, and the mounted component is the middle frame housing in the terminal device. If virtual verification is performed on the gap caused when the rear camera and the circuit board are assembled in this embodiment of this application, the to-be-mounted component is the rear camera in the terminal device, and the mounted component is the circuit board in the terminal device.

By using specific embodiments, the following describes in detail the technical solutions of this application and how to resolve the foregoing technical problem by using the technical solutions of this application.

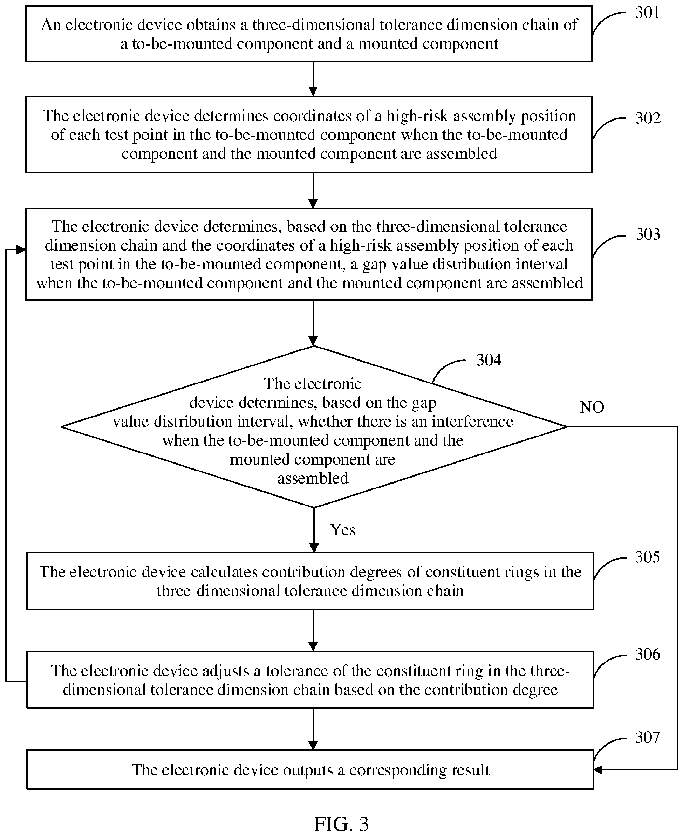

For example, FIG. 3 is a flowchart of an assembly verification method according to an embodiment of this application. As shown in FIG. 3, the assembly verification method may specifically include the following steps.

Step 301: An electronic device obtains a three-dimensional tolerance dimension chain of a to-be-mounted component and a mounted component.

In some embodiments, based on three-dimensional structural drawings of the to-be-mounted component and the mounted component, a closed ring in the three-dimensional tolerance dimension chain may be determined as a gap between the to-be-mounted component and the mounted component when the to-be-mounted component and the mounted component are assembled. Then, based on an assembly process and an assembly method used when the to-be-mounted component and the mounted component are assembled, constituent rings affecting an accuracy indicator of the closed ring are determined. Finally, based on the determined plurality of constituent rings and the closed ring, the three-dimensional tolerance dimension chain of the to-be-mounted component and the mounted component is determined. Each constituent ring in the three-dimensional tolerance dimension chain has respective corresponding dimensional information.

A dimension chain means a dimension group of a closed ring formed by interconnected dimensions in a process of machine assembly or part machining, and is also referred to as a tolerance chain. Each dimension forming the dimension ring is referred to as a ring. The ring includes two types of rings, namely, a closed ring and a constituent ring. The closed ring is a ring which may be indirectly guaranteed based on closure of the dimension chain, and is a ring finally formed in a process of assembling or machining of a part. The constituent ring means a ring that is in the dimension chain and that can affect the closed ring, that is, all rings in the dimension chain other than the closed ring are referred to as the constituent ring.

For example, if the to-be-mounted component is a front camera in a terminal device and the mounted component is a screen in the terminal device, the closed ring in the three-dimensional tolerance dimension chain may be a gap between the front camera and the screen. The dimensional information of the constituent ring in the three-dimensional tolerance dimension chain includes an aperture and a tolerance of a mounting hole disposed in the screen, dimensions and tolerances of various parts of the front camera, an alignment deviation between a support and the mounting hole in the screen, and the like.

In actual application, the electronic device may be connected to an input device. A user may enter three-dimensional structural drawings of the to-be-mounted component and the mounted component into the electronic device by operating the input device. The user may also manually select, by operating the input device, a closed ring and constituent rings from the three-dimensional structural drawings, and enter dimensional information of the constituent rings into the electronic device, to enable the electronic device to obtain a three-dimensional tolerance dimension chain of the to-be-mounted component and the mounted component. The input device may be a device such as a mouse, a keyboard, a touchscreen, or the like.

Step 302: The electronic device determines the coordinates of a high-risk assembly position of each test point in the to-be-mounted component when the to-be-mounted component and the mounted component are assembled.

In some embodiments, after obtaining the three-dimensional structural drawings of the to-be-mounted component and the mounted component, the electronic device may select a plurality of test points from the to-be-mounted component on the three-dimensional structural drawing based on assembly constraint limit information of the to-be-mounted component and the mounted component. Each test point may be actually disposed on surfaces, disposed opposite to each other, of the to-be-mounted component and the mounted component.

The assembly constraint limit information means a geometric positioning constraint relationship between the to-be-mounted component and the mounted component, specifically means a positional and directional relationship between a feature surface of the to-be-mounted component and a feature surface of the mounted component.

After the electronic device determines the plurality of test points in the to-be-mounted component, the electronic device determines the coordinates of a high-risk assembly position of each test point when the to-be-mounted component and the mounted component are assembled. The coordinates of a high-risk assembly position of each test point in the to-be-mounted component actually means: an assembly position corresponding to a minimum nominal gap value between each test point in the to-be-mounted component and the mounted component when the to-be-mounted component and the mounted component are assembled, caused when an influence of a tolerance of the constituent ring in the three-dimensional tolerance dimension chain is not considered but only an influence of an assembly operation of manually assembling the to-be-mounted component and the mounted component is considered.

For example, if the to-be-mounted component is the front camera in the terminal device and the mounted component is the screen in the terminal device, the coordinates of a high-risk assembly position of each test point in the to-be-mounted component actually means: an assembly position corresponding to a minimum nominal gap value between each test point in the front camera and the screen, caused when a tolerance of each component of the front camera in the three-dimensional tolerance dimension chain, the alignment deviation between the support and the mounting hole in the screen, and another factor is not considered but only an assembly operation of assembling the front camera in the mounting hole in the screen is considered.

In a possible implementation, the coordinates of a high-risk assembly position of each test point may be determined in the following manner: The electronic device calculates the minimum nominal gap value between each test point in the to-be-mounted component and the mounted component when the to-be-mounted component and the mounted component are assembled; and the electronic device determines the coordinates of a high-risk assembly position of the test point based on the minimum nominal gap value.

Specifically, for one test point in the to-be-mounted component, a minimum nominal gap value between the test point and the to-be-mounted component may be calculated in the following manner: The electronic device determines a first coordinate value of the test point in a first direction and a second coordinate value of the test point in a second direction when the to-be-mounted component and the mounted component are assembled; the electronic device detects a third coordinate value of the test point in a third direction at a different tilt angle when the to-be-mounted component rotates; the electronic device determines a nominal gap value between the test point at the different tilt angle and the mounted component based on the first coordinate value, the second coordinate value, and the third coordinate value; and the electronic device determines a minimum value of the nominal gap value of the test point at the different tilt angle as the minimum nominal gap value between the test point and the mounted component.

First, when the one test point is selected from the to-be-mounted component, coordinate values of the test point in the first direction and the second direction are fixed. Therefore, when the electronic device may obtain the first coordinate value of the test point in the first direction and the second coordinate value of the test point in the second direction when the to-be-mounted component and the mounted component are assembled. The first direction may be an X direction and the second direction may be a Y direction, position coordinates of the test point are $(X_1, Y_1, Z)$, where $X_1$ represents a first coordinate value in the X direction, and $Y_1$ represents a second coordinate value in the Y direction. In this case, a specific value of Z is to be determined.

Next, the electronic device determines, under the premise that there is no collision interference between the to-be-mounted component and the mounted component, a maximum tilt angle $\phi_{max}$ of the to-be-mounted component in the third direction when the to-be-mounted component rotates, and a corresponding tilt angle $\phi_{end}$ when the to-be-mounted component rotates in place. $\phi_{end}$ may be understood as a tilt angle required when the to-be-mounted component is mounted. For example, if the first direction is the X direction and the second direction is the Y direction, the third direction may be a Z direction, where the X direction may be a direction of a short side of the screen, the Y direction may be a direction of a long side of the screen, and the Z direction may be a direction, facing the support, of the screen.

Because a third coordinate value of the test point in the third direction at a different tilt angle is different when the to-be-mounted component rotates, the electronic device may separately obtain the third coordinate value of the test point in the third direction at a different tilt angle when the to-be-mounted component rotates.

It may be understood when the third coordinate value of the test point in the third direction at a different tilt angle is obtained when the to-be-mounted component rotates, a step size of the tilt angle may be set based on an actual situation. For example, the step size of the tilt angle may be 1°. To be specific, when the to-be-mounted component rotates, the third coordinate value of the test point in the third direction is detected once every time when the tilt angle is changed by 1°.

Then the electronic device may calculate the nominal gap value between the test point at the different tilt angle and the mounted component based on the first coordinate value, the second coordinate value that are fixed, and a third coordinate value corresponding to the different tilt angle.

In a possible implementation, the electronic device may determine, based on the first coordinate value, the second coordinate value, and the third coordinate value, a first projection gap in the first direction, a second projection gap in the second direction, and a third projection gap in the third direction, between the test point at the different tilt angle and the mounted component. The electronic device calculates a square root of a sum of squares of the first projection gap, the second projection gap, and the third projection gap, to obtain the nominal gap value between the test point at the different tilt angle and the mounted component.

For example, if the first direction is the X direction, the second direction is the Y direction, and the third direction is the Z direction, unit factors in three coordinate directions of a right-angled coordinate value are established, a unit vector in the X direction is (1, 0, 0), a unit vector in the Y direction is (0, 1, 0), and a unit vector in the Z direction is (0, 0, 1). The electronic device may determine projection gaps between the test point and the mounted component in the unit vectors in the three coordinate directions based on the first coordinate value, the second coordinate value, and the third coordinate value. That is, the electronic device may determine a first projection gap $h_x$ between the test point and the mounted component in the X direction, a second projection gap $h_y$ between the test point and the mounted component in the Y direction, and a third projection gap $h_z$ between the test point and the mounted component in the Z direction. A nominal gap value h between the test point and the mounted component may be

$$h = sqrt\left(h_x^2 + h_y^2 + h_z^2\right).$$

Therefore, in the foregoing manner, the electronic device may obtain the nominal gap values between the test point at a plurality of different tilt angles and the to-be-mounted component by calculation. For example, when the to-be-mounted component rotates from a maximum tilt angle $\phi_{max}$ to $\phi_{end}$, the nominal gap value h between the test point at the different tilt angle and the mounted component obtained by calculation includes ($h_1$, $h_2$, $h_3$, ..., hn).

Finally, the electronic device searches for a minimum value from the nominal gap values h between the test point and the mounted component, and determines the minimum value in the nominal gap values of the test point at different tilt angles as the minimum nominal gap value between the test point and the mounted component, that is, a minimum nominal gap value $h_{nom,min} = min(h_1, h_2, h_3, ..., h_n)$.

After the minimum nominal gap value between the test point and the mounted component is obtained by calculation in the foregoing manner, the coordinates of a high-risk assembly position of the test point may be determined in the following manner: The electronic device determines the coordinates of a high-risk assembly position of the test point based on the first coordinate value, the second coordinate value, and a third coordinate value corresponding to the minimum nominal gap value.

Because the coordinate values of the test point in the first direction and the second direction are fixed, the third coordinate value corresponding to the minimum nominal gap value may be obtained by calculation. Then the electronic device determines the coordinates of a high-risk assembly position of the test point based on the first coordinate value, the second coordinate value, and the third coordinate value corresponding to the minimum nominal gap value. To be specific, a coordinate value in a first direction in the coordinates of a high-risk assembly position is the first coordinate value, a coordinate value in a second direction in the coordinates of a high-risk assembly position is the second coordinate value, and a coordinate value in a third direction in the coordinates of a high-risk assembly position is the third coordinate value corresponding to the minimum nominal gap value.

For example, when the first coordinate value of the test point in the X direction and the second coordinate value of the test point in the Y direction are fixed, and the first coordinate value in the X direction is $X_1$, the second coordinate value in the Y direction is $Y_1$, and the third coordinate value corresponding to the minimum nominal gap value is $Z_m$, the coordinates of a high-risk assembly position are ($X_1$, $Y_1$, $Z_m$).

The foregoing process describes in detail a manner in which the coordinates of a high-risk assembly position of the one test point in the to-be-mounted component is determined. Therefore, coordinates of a high-risk assembly position of another test point in the to-be-mounted component may be separately determined in the foregoing manner.

In this manner in which coordinates of a high-risk assembly position of the test point is determined by simulating rotation of the to-be-mounted component to obtain a minimum nominal gap value between the test point at the different tilt angle and the mounted component, a manual assembly angle when the to-be-mounted component and the mounted component are assembled may be covered, to well simulate an assembly operation of assembling the to-be-mounted component and the mounted component. Subsequently, while a gap value distribution interval when the to-be-mounted component and the mounted component are assembled is determined based on the coordinates of a high-risk assembly position of each test point in the to-be-mounted component, influence factors of an actual manual assembly operation on the gap value obtained when the to-be-mounted component and the mounted component are assembled may be considered, to more accurately predict whether there is an interference to assembly of the to-be-mounted component and the mounted component.

In addition, the nominal gap value between the test point and the mounted component may be calculated based on the projection gaps in the three coordinate directions. Therefore, the nominal gap value obtained by calculation is more accurate.

It may be understood that a sequence in which step 301 and step 302 are performed may be changed. Step 301 may be first performed, and then step 302 may be performed. Alternatively, step 302 may be first performed, and then step 301 may be performed. A specific performing sequence may be set based on an actual situation. This is not limited herein.

Step 303: The electronic device determines, based on the three-dimensional tolerance dimension chain and the coordinates of a high-risk assembly position of each test point in the to-be-mounted component, the gap value distribution interval when the to-be-mounted component and the mounted component are assembled.

In some embodiments, after the electronic device obtains the three-dimensional tolerance dimension chains of the to-be-mounted component and the mounted component, and the coordinates of a high-risk assembly position of each test point in the to-be-mounted component, the electronic device determines, based on the three-dimensional tolerance dimension chain and the coordinates of a high-risk assembly position of each test point, the gap value distribution interval when the to-be-mounted component and the mounted component are assembled.

In other words, the electronic device may perform coupling analysis based on the coordinates of a high-risk assembly position of each test point in the to-be-mounted component with reference to tolerances of the constituent rings in the three-dimensional tolerance dimension chain. When the coordinates of a high-risk assembly position of each test point in the to-be-mounted component is determined, an actual three-dimensional gap value obtained when the to-be-mounted component and the mounted component are assembled may be obtained based on distribution of the tolerances of the constituent rings in the three-dimensional tolerance dimension chain.

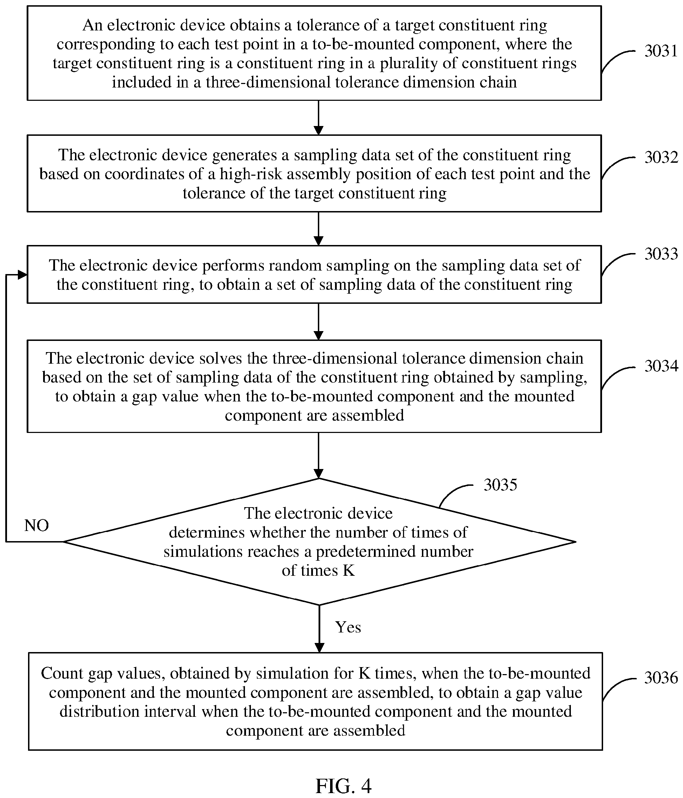

In a possible implementation, the gap value distribution interval when the to-be-mounted component and the mounted component are assembled may be determined in a Monte Carlo random distribution method. FIG. 4 is a flowchart of calculating a gap value distribution interval in a Monte Carlo simulation method according to an embodiment of this application. As shown in FIG. 4, a method for calculating the gap value distribution interval in a Monte Carlo simulation method may include step 3031 to step 3036.

Step 3031: An electronic device obtains a tolerance of a target constituent ring corresponding to each test point in the to-be-mounted component, where the target constituent ring is a constituent ring in a plurality of constituent rings included in a three-dimensional tolerance dimension chain.

In some embodiments, after the electronic device obtains coordinates of a high-risk assembly position of each test point in the to-be-mounted component, the electronic device may determine that the test point actually belongs to a constituent ring in the three-dimensional tolerance dimension chain, and determines the constituent ring which the test point belongs to as the target constituent ring. The electronic device obtains a tolerance of the target constituent ring from the three-dimensional tolerance dimension chain.

Step 3032: The electronic device generates a sampled data set of the constituent ring based on the coordinates of a high-risk assembly position of each test point and the tolerance of the target constituent ring.

In some embodiments, the electronic device takes the coordinates of a high-risk assembly position of each test point as a datum, and generates the sampled data set of the constituent ring based on tolerances of target constituent rings corresponding to the test point in three coordinate directions.

The sampled data set of the constituent ring may include: sampled data of a plurality of sets of constituent rings in the first direction, sampled data of a plurality of sets of constituent rings in the second direction, and sampled data of a plurality of sets of constituent rings in the third direction.

Step 3033: The electronic device performs random sampling from the sampled data set of the constituent ring, to obtain one set of sampled data of the constituent ring.

In some embodiments, after the electronic device generates the sampled data set of the constituent ring, the electronic device performs random sampling from the sampled data set of the constituent ring, to obtain the one set of sampled data of the constituent ring. The one set of sampled data of the constituent ring includes sampled data of constituent rings in the first direction, sampled data of constituent rings in the second direction, and sampled data of constituent rings in the third direction.

Step 3034: The electronic device solves the three-dimensional tolerance dimension chain based on the one set of sampled data of the constituent ring obtained by sampling, to obtain the gap value obtained when the to-be-mounted component and the mounted component are assembled.

In some embodiments, after the one set of sampled data of the constituent ring is obtained each time by sampling, the electronic device substitutes the one set of sampled data of the constituent ring into a dimension chain equation, to solve the three-dimensional tolerance dimension chain, and obtain, by calculation, the gap value obtained when the to-be-mounted component and the mounted component are assembled.

Step 3035: The electronic device determines whether the number of times of simulations reaches a predetermined number of times K.

In some embodiments, after one gap value obtained when the to-be-mounted component and the mounted component are assembled is obtained by calculation each time, the electronic device determines once whether a current number of times of simulations reaches the predetermined number of times K.

The number of times of simulations may mean the number of times of sampling one set of sampled data of the constituent ring from the sampled data set of the constituent ring. The number of times of simulations may also mean the number of times of calculating the gap value obtained when the to-be-mounted component and the mounted component are assembled by solving the three-dimensional tolerance dimension chain based on the one set of sampled data of the constituent ring.

In actual application, the predetermined number of times K may be set based on a simulation precision requirement, and the predetermined number of times K is an integer greater than 1. When the predetermined number of times K is adequate, the gap value distribution interval finally obtained by calculation when the to-be-mounted component and the mounted component are assembled is precise. However, as the predetermined number of times K increases, efficiency of calculating the gap value distribution interval when the to-be-mounted component and the mounted component are assembled decreases. Therefore, in this embodiment of this application, a relationship between the calculation precision and calculation efficiency may be balanced, and an appropriate predetermined number of times K may be selected. For example, the predetermined number of times K may be 10,000 times.

Step 3036: When the number of times of simulations reaches the predetermined number of times K, the gap value distribution interval when the to-be-mounted component and the mounted component are assembled may be obtained by counting the gap value, obtained by simulation for K times, when the to-be-mounted component and the mounted component are assembled.

In some embodiments, when the electronic device determines that the number of times of simulations reaches the predetermined number of times K, the electronic device also obtains K gap values when the to-be-mounted component and the mounted component are assembled. Therefore, the electronic device may count the K gap values, obtained by simulation for K times, when the to-be-mounted component and the mounted component are assembled, to obtain the gap value distribution interval when the to-be-mounted component and the mounted component are assembled. The gap value distribution interval may be understood as a distribution interval of a gap value corresponding to an assembly position with a highest risk.

When the electronic device determines that the number of times of simulations does not reach the predetermined number of times K, the electronic device repeats step 3033 to step 3035, until that the number of times of simulations reaches the predetermined number of times K.

It may be understood that in this embodiment of this application, the gap value distribution interval when the to-be-mounted component and the mounted component are assembled may be determined based on the three-dimensional tolerance dimension chain and the coordinates of a high-risk assembly position of each test point in other methods in addition to the Monte Carlo simulation method, such as an extreme value method, a probability statistics method, and the like.

Step 304: The electronic device determines, based on the gap value distribution interval, whether there is the interference when the to-be-mounted component and the mounted component are assembled.

In some embodiments, after the electronic device obtains, by calculation, the gap value distribution interval when the to-be-mounted component and the mounted component are assembled, the electronic device may determine, based on the gap value distribution interval, whether there is the interference when the to-be-mounted component and the mounted component are assembled.

In a possible implementation, the electronic device may determine, in the following manner whether there is the interference when the to-be-mounted component and the mounted component: The electronic device determines whether there is a gap value less than 0 in the gap value distribution interval; and if there is the gap value less than 0 in the gap value distribution interval, the electronic device determines that there is the interference when the to-be-mounted component and the mounted component are assembled; or if there is no gap value less than 0 in the gap value distribution interval, the electronic device determines that there is no interference when the to-be-mounted component and the mounted component are assembled.

In other words, if there is any gap value less than 0 in the gap value distribution interval, the electronic device determines that there may be the interference when the to-be-mounted component and the mounted component are assembled. Therefore, if the electronic device needs to adjust tolerances of constituent rings in the three-dimensional tolerance dimension chain, the electronic device may perform step 305 to step 307. When all gap values in the gap value distribution interval are greater than or equal to 0, it is determined that there is no interference when the to-be-mounted component and the mounted component are assembled. Therefore, step 307 may be directly performed.

For example, when the gap value distribution interval, obtained by calculation, when the to-be-mounted component and the mounted component are assembled is [-0.05 mm, 0.1 mm], there is the gap value less than 0 in the gap value distribution interval, and it is determined that there may be the interference when the to-be-mounted component and the mounted component are assembled.

In conclusion, according to step 301 to step 304 in this embodiment of this application, at the product design stage, it may be predicted whether there is the interference when the to-be-mounted component and the mounted component are assembled at a mass production stage by a virtual assembly verification method, instead of a physical verification method. Therefore, while it is predicted that there may be the interference when the to-be-mounted component and the mounted component are assembled at the mass production stage, an interference caused by an unreasonable design may be intercepted by taking corresponding strategies. This greatly shortens a product design return cycle, reduces manpower and material costs.

In addition, in this embodiment of this application, dynamic assembly simulation and coupling analysis of the three-dimensional tolerance are performed. The dynamic assembly simulation may cover a manual assembly operation when the to-be-mounted component and the mounted component are assembled, and during coupling analysis of the three-dimensional tolerance, a tolerance range of the constituent rings in the three-dimensional tolerance dimension chain may include a case in which a dimension of the to-be-mounted component reaches a limit dimension (that is, the limit dimension may be a design dimension of the to-be-mounted component + a maximum tolerance in the tolerance range). Therefore, it may be simulated, under a common influence of the tolerance of the constituent ring and the manual assembly operation, whether there is the interference when the to-be-mounted component and the mounted component are assembled. This improves accuracy of interference simulation verification.

Step 305: If there is the interference when the to-be-mounted component and the mounted component are assembled, the electronic device calculates contribution degrees of constituent rings in the three-dimensional tolerance dimension chain.

In some embodiments, if the electronic device determines that there is the interference when the to-be-mounted component and the mounted component are assembled, the electronic device may calculate the contribution degrees of the constituent rings in the three-dimensional tolerance dimension chain. The contribution degree reflects a contribution degree of the tolerance of the constituent ring in the three-dimensional tolerance dimension chain to the closed ring.

Specifically, the electronic device may calculate contribution degrees of constituent rings in the three-dimensional tolerance dimension chain in the first direction by using a calculation formula of a contribution degree below, where

$$Cx_i = \frac{\left(\frac{\partial U}{\partial x_i} \times \sigma_{x_i}\right)^2}{\sigma_u^2}$$

$Cx_i$ represents a contribution degree of an i$^{th}$ constituent ring in the first direction, $x_i$ represents the i$^{th}$ constituent ring in the first direction, U represents a closed ring in the three-dimensional tolerance dimension chain, where the closed ring is a gap formed when the to-be-mounted component and the mounted component are assembled, $\sigma_{x_i}$ represents a standard deviation of the i$^{th}$ constituent ring in the first direction, and $\sigma_u$ represents a standard deviation of the closed ring.

Correspondingly, a calculation formula of a contribution degree of the constituent rings in the three-dimensional tolerance dimension chain in the second direction is:

$$Cy_i = \frac{\left(\frac{\partial U}{\partial y_i} \times \sigma_{y_i}\right)^2}{\sigma_u^2}$$

where $C_{yi}$ represents a contribution degree of an i$^{th}$ constituent ring in the second direction, $y_i$ represents the i$^{th}$ constituent ring in the second direction, and $\sigma_{y_i}$ represents a standard deviation of the i$^{th}$ constituent ring in the second direction.

Correspondingly, a calculation formula of a contribution degree of each constituent ring in the three-dimensional tolerance dimension chain in the third direction is:

$$Cz_i = \frac{\left(\frac{\partial U}{\partial z_i} \times \sigma_{z_i}\right)^2}{\sigma_u^2}$$

where $Cz_i$ represents a contribution degree of an i$^{th}$ constituent ring in the third direction, $Z_i$ represents the i$^{th}$ constituent ring in the third direction, and $\sigma_{z_i}$ represents a standard deviation of the i$^{th}$ constituent ring in the third direction.

Step 306: The electronic device adjusts the tolerance of the constituent ring in the three-dimensional tolerance dimension chain based on the contribution degree, until it is determined, based on an adjusted three-dimensional tolerance dimension chain and the coordinates of a high-risk assembly position, that there is no interference when the to-be-mounted component and the mounted component are assembled.

In some embodiments, after the electronic device obtains, by calculation, the contribution degrees of the constituent rings in the three-dimensional tolerance dimension chain in the first direction, the second direction, and the third direction, the electronic device adjusts the tolerances of the constituent rings in the three-dimensional tolerance dimension chain based on the contribution degrees of the constituent rings.

After adjusting the tolerances of the constituent rings in the three-dimensional tolerance dimension chain each time, the electronic device performs step 303 and step 304. In other words, after adjusting the tolerance of the constituent ring in the three-dimensional tolerance dimension chain, the electronic device needs to determine, based on the adjusted three-dimensional tolerance dimension chain and the coordinates of a high-risk assembly position of each test point, the gap value distribution interval when the to-be-mounted component and the mounted component are assembled, and determine, based on the gap value distribution interval, whether there is the interference when the to-be-mounted component and the mounted component are assembled.

When determining, based on the adjusted three-dimensional tolerance dimension chain, that there is the interference when the to-be-mounted component and the mounted component are assembled, the electronic device continuously performs step 305 and step 306. When determining, based on the adjusted three-dimensional tolerance dimension chain, that there is no interference when the to-be-mounted component and the mounted component are assembled, the electronic device directly performs step 307 below.

In a possible implementation, a constituent ring with a higher contribution degree has a greater influence on the gap value obtained when the to-be-mounted component and the mounted component are assembled. A constituent ring with a low contribution degree has a small influence on the gap value obtained when the to-be-mounted component and the mounted component are assembled. Therefore, the electronic device adjusts, based on a sequence of contribution degrees of constituent rings in a same direction from high to low, a tolerance of at least one constituent ring with ranking top in the three-dimensional tolerance dimension chain.

The electronic device may rank the contribution degrees of the constituent rings in the first direction from high to low. The electronic device may also rank the contribution degrees of the constituent rings in the second direction from high to low. The electronic device may also rank the contribution degrees of the constituent rings in the third direction from high to low.

When adjusting the tolerance of the at least one constituent ring ranking top in the three-dimensional tolerance dimension chain, the electronic device may adjust at least one of a tolerance of a constituent ring with a contribution degree ranking top in the first direction, a tolerance of a constituent ring with a contribution degree ranking top in the second direction, and a tolerance of a constituent ring with a contribution degree ranking top in the third direction. In addition, there may be one constituent ring of which tolerance needs to be adjusted in a same direction. Alternatively, there may be a plurality of constituent rings of which tolerances need to be adjusted in the same direction. A quantity of constituent rings of which tolerances need to be adjusted in the same direction may be set based on an actual situation. This is not limited in this application.

For example, if the to-be-mounted component is the front camera in the terminal device and the mounted component is the screen in the terminal device, the electronic device may adjust a tolerance of a constituent ring with a contribution degree ranking top one in the three directions. In an actual adjustment process, an adjustment on a tolerance of a constituent ring that is mainly adjusted by the electronic device includes the following two aspects: an adjustment on a tolerance of a corresponding part of the front camera, and an adjustment on alignment deviation between the support and the mounting hole in the screen.

In actual application, the adjustment on a tolerance of a corresponding part of the front camera actually means an adjustment on a tolerance of a material. As distribution of material dimensions of the front camera is usually normal distribution, a difference between an actual dimension of the front camera closer to the normal distribution and a design dimension of the front camera is smaller. When a front camera with a larger difference between an actual dimension and a design dimension is assembled in the mounting hole in the screen, scratching easily occurs between the front camera and the screen. Therefore, management and control requirements for the material of the front camera is to be set to be stricter, to improve an acceptance standard for the material of the front camera, and enable a difference between an actual dimension and a design dimension of the front camera that meets a verification condition to be relatively small. That is, a tolerance range of the front camera is narrowed. Therefore, when the front camera with a relatively small difference between the actual dimension and the design dimension is assembled in the mounting hole in the screen, scratching does not easily occur between the front camera and the screen.

For example, when a tolerance of a part of the front camera in a direction is ± 0.01 mm, it is verified that when the front camera is assembled in the mounting hole in the screen, scratching occurs between the front camera and the screen, and the part of the front camera has a highest contribution degree in the direction. Therefore, the tolerance of the part of the front camera in the direction may be reduced to ± 0.005 mm.

In actual application, adjustment on alignment deviation between the support and the mounting hole in the screen actually means adjustment on device precision. When the front camera is assembled in the mounting hole in the screen, the front camera is to be positioned by using the support. If the alignment deviation between the support and the mounting hole in the screen is larger, when the front camera is assembled in the mounting hole in the screen, scratching easily occurs between the front camera and the screen. Therefore, the device is to be managed and controlled, to improve the device precision, and reduce the alignment deviation between the support and the mounting hole in the screen. Therefore, when the front camera is assembled in the mounting hole in the screen, a probability that scratching occurs between the front camera and the screen is reduced.

For example, when an original alignment deviation between the support and the mounting hole in the screen is 0.03 mm, it is verified that when the front camera is assembled into the mounting hole in the screen, scratching may occur between the front camera and the screen, and the alignment deviation between the support and the mounting hole in the screen has a highest contribution degree in a direction. Therefore, the alignment deviation between the support and the mounting hole in the screen may be reduced to 0.02 mm.

It is found that after corresponding strategies for narrowing the tolerance range of the front camera and reducing the alignment deviation between the support and the mounting hole in the screen are taken, a probability that a dark spot occurs around the front camera of the terminal device at the mass production stage may be reduced to several millionths from original several ten thousandths.

Therefore, in this embodiment of this application, at the product design stage, it may be predicted whether there is the interference when the to-be-mounted component and the mounted component are assembled at the mass production stage. When it is predicted that there may be the interference when the to-be-mounted component and the mounted component are assembled at the mass production stage, rationality of a design on the tolerance of the constituent ring in the three-dimensional tolerance dimension chain may be determined. From an influencing factor that with a high contribution degree, a design source resulting in the interference when the to-be-mounted component and the mounted component are assembled is determined. The tolerance of the constituent ring in the three-dimensional tolerance dimension chain is optimized until that a three-dimensional tolerance dimension chain with no interference when the to-be-mounted component and the mounted component are assembled is obtained by simulation, to further accelerate the product design return cycle.

Step 307: The electronic device outputs a corresponding result.

If the tolerance of the constituent ring in the three-dimensional tolerance dimension chain is adjusted for a plurality of times, and it is determined, based on the finally adjusted three-dimensional tolerance dimension chain and the coordinates of high-risk assembly position, that there is no interference when the to-be-mounted component and the mounted component are assembled, the result output by the electronic device may include tolerances of constituent rings in the finally adjusted three-dimensional tolerance dimension chain. Alternatively, in this case, the result output by the electronic device may include only tolerances of adjusted constituent rings in the three-dimensional tolerance dimension chain, and a tolerance of an unadjusted constituent ring in the three-dimensional tolerance dimension chain may not be output. Alternatively, the result output by the electronic device may include only prompt information that the tolerances of the constituent rings in the adjusted three-dimensional tolerance dimension chain meet a requirement.

If the tolerance of the constituent ring in the three-dimensional tolerance dimension chain is not adjusted, and it is directly determined, based on an original three-dimensional tolerance dimension chain and the coordinates of a high-risk assembly position, that there is no interference when the component to be mounted and the mounted component are assembled, the result output by the electronic device may include the prompt information that the tolerances of the constituent rings in the three-dimensional tolerance dimension chain meet a requirement. Alternatively, in this case, the result output by the electronic device may also include the tolerances of the constituent rings in the original three-dimensional tolerance dimension chain.

Therefore, the electronic device may indicate, by outputting the corresponding result, personnel to determine, based on the output result, whether the material and the device need to be managed and controlled, and when the material and the device need to be managed and controlled, may indicate the worker to manage and control the material and the device according to corresponding management and control standards.

The foregoing describes the assembly verification method in embodiments of this application. The following describes an electronic device that is provided in embodiments of this application and that performs the assembly verification method. A person skilled in the art may understand that the method and the apparatus may be mutually combined and referenced, and the electronic device provided in the embodiments of this application may perform the steps of the foregoing assembly verification method.

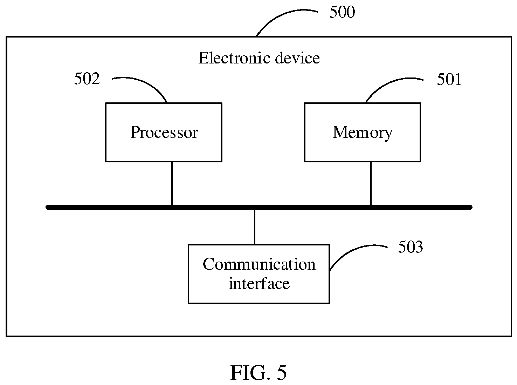

FIG. 5 is a schematic diagram of a hardware structure of an electronic device according to an embodiment of this application. An electronic device 500 shown in FIG. 5 includes: a memory 501, a processor 502, and a communication interface 503. The memory 501, the processor 502, and the communication interface 503 may perform communication. For example, the memory 501, the processor 502, and the communication interface 503 may perform communication through a communication bus.

The memory 501 may be a read-only memory (read-only memory, ROM), a static storage device, a dynamic storage device, or a random access memory (random access memory, RAM). The memory 501 may store a computer program, the processor 502 controls execution of the computer program, and communication interface 503 performs communication, to implement the assembly verification method provided in embodiments of this application.

The processor 502 may be a central processing unit (central processing unit, CPU), a microprocessor, an application-specific integrated circuit (application-specific integrated circuit, ASIC), a graphics processing unit (graphics processing unit, GPU), or one or more integrated circuits.

The processor 502 may alternatively be an integrated circuit chip and has a signal processing capability. In an implementation process, functions of the assembly verification method in this application may be implemented by using a hardware-integrated logic circuit in the processor 502, or by using instructions in a form of software. The processor 502 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or a transistor logic device, or a discrete hardware component, and may implement or execute the methods, steps, and logical block diagrams disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed by a combination of hardware and a software module in the decoding processor. The software module may be located in a mature storage medium in the art such as a random access memory, a flash memory, a read-only memory, a programmable read-only memory, an electrically erasable programmable memory, or a register. The storage medium is located in the memory 501, and the processor 502 reads information in the memory 501 and completes the functions of the assembly verification method provided in embodiments of this application in combination with hardware of the processor 502.

The communication interface 503 in the chip may be an input/output interface, a pin, a circuit, or the like.

The electronic device 500 in this embodiment may be correspondingly configured to perform the steps in the foregoing method embodiment. Implementation principles and technical effects of the electronic device are similar, and details are not described herein again.

In some embodiments, the electronic device 500 may be an electronic device that is configured to virtually verify whether there is an interference when the to-be-mounted component and the mounted component are assembled, such as a personal computer (personal computer, PC), a tablet computer, or the like.

An embodiment of this application further provides a computer-readable storage medium. The methods described in the foregoing embodiments may be all or partially implemented by software, hardware, firmware, or any combination thereof. If the methods are implemented in the software, functions may be used as one or more instructions or code and stored in the computer-readable medium or transmitted on the computer-readable medium. The computer-readable medium may include a computer storage medium and a communication medium, and may further include any medium that can transfer a computer program from one place to another. The storage medium may be any target medium that can be accessed by a computer.

In a possible implementation, the computer-readable medium may include a RAM, a ROM, a compact disc read-only memory (compact disc read-only memory, CD-ROM), or another compact disc storage, a magnetic disk storage or another magnetic storage device, or any other medium that is used to carry or store required program code in a form of instructions or a data structure and that can be accessed by a computer. In addition, any connection is appropriately referred to as a computer-readable medium. For example, if a coaxial cable, an optical fiber cable, a twisted pair, a digital subscriber line (digital subscriber line, DSL), or wireless technologies (such as infrared, radio, and microwave) are used to transmit software from a website, a server, or another remote source, the coaxial cable, the optical fiber cable, the twisted pair, the DSL, or the wireless technologies such as infrared, radio, and microwave are included in a definition of the medium. Magnetic disks and optical disks used in this specification include a compact disc, a laser disc, an optical disc, a digital versatile disc (digital versatile disc, DVD), a floppy disk, and a Blu-ray disc. The magnetic disk usually magnetically reproduces data, and the optical disk optically reproduces data by using a laser. The foregoing combinations also need to be included within the scope of the computer-readable medium.

Embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processing unit of another programmable data processing device to generate a machine, so that the instructions executed by the computer or the processing unit of the another programmable data processing device generate an apparatus for implementing a specified function in one or more processes in the flowcharts and/or in one or more blocks in the block diagrams.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

**Claims**

1. An assembly verification method, applied to an electronic device, wherein the method comprises:

   obtaining, by the electronic device, a three-dimensional tolerance dimension chain of a to-be-mounted component and a mounted component;
   determining, by the electronic device, coordinates of a high-risk assembly position of each test point in the to-be-mounted component when the to-be-mounted component and the mounted component are assembled;
   determining, by the electronic device based on the three-dimensional tolerance dimension chain and the coordinates of a high-risk assembly position of each test point in the to-be-mounted component, a gap value distribution interval when the to-be-mounted component and the mounted component are assembled; and
   determining, by the electronic device based on the gap value distribution interval, whether there is an interference when the to-be-mounted component and the mounted component are assembled.

2. The method according to claim 1, wherein the determining, by the electronic device, coordinates of a high-risk assembly position of each test point in the to-be-mounted component when the to-be-mounted component and the mounted component are assembled comprises:

   calculating, by the electronic device, a minimum nominal gap value between each test point in the to-be-mounted component and the mounted component when the to-be-mounted component and the mounted component are assembled; and
   determining, by the electronic device, the coordinates of a high-risk assembly position of the test point based on the minimum nominal gap value.

3. The method according to claim 2, wherein the calculating, by the electronic device, a minimum nominal gap value between each test point in the to-be-mounted component and the mounted component when the to-be-mounted component and the mounted component are assembled comprises:

determining, by the electronic device, a first coordinate value of the test point in a first direction and a second coordinate value of the test point in a second direction when the to-be-mounted component and the mounted component are assembled;

detecting, by the electronic device, a third coordinate value of the test point in a third direction at a different tilt angle when the to-be-mounted component rotates;

determining, by the electronic device, a nominal gap value between the test point at the different tilt angle and the mounted component based on the first coordinate value, the second coordinate value, and the third coordinate value; and

determining, by the electronic device, a minimum value of the nominal gap value of the test point at the different tilt angle as a minimum nominal gap value between the test point and the mounted component.

4. The method according to claim 3, wherein the determining, by the electronic device, a nominal gap value between the test point at the different tilt angle and the mounted component based on the first coordinate value, the second coordinate value, and the third coordinate value comprises:

determining, by the electronic device, based on the first coordinate value, the second coordinate value, and the third coordinate value, a first projection gap in the first direction, a second projection gap in the second direction, and a third projection gap in the third direction, between the test point at the different tilt angle and the mounted component; and

calculating, by the electronic device, a square root of a sum of squares of the first projection gap, the second projection gap, and the third projection gap, to obtain the nominal gap value between the test point at the different tilt angle and the mounted component.

5. The method according to claim 3, wherein the determining, by the electronic device, the coordinates of a high-risk assembly position of the test point based on the minimum nominal gap value comprises:
determining, by the electronic device, the coordinates of a high-risk assembly position of the test point based on the first coordinate value, the second coordinate value, and a third coordinate value corresponding to the minimum nominal gap value.

6. The method according to claim 1, wherein the determining, by the electronic device based on the three-dimensional tolerance dimension chain and the coordinates of a high-risk assembly position of each test point in the to-be-mounted component, a gap value distribution interval when the to-be-mounted component and the mounted component are assembled comprises:

obtaining, by the electronic device, a tolerance of a target constituent ring corresponding to each test point in the to-be-mounted component, wherein the target constituent ring is a constituent ring in a plurality of constituent rings comprised in the three-dimensional tolerance dimension chain;

generating, by the electronic device, a sampled data set of the constituent ring based on the coordinates of a high-risk assembly position of each test point and the tolerance of the target constituent ring; and

solving, by the electronic device, the three-dimensional tolerance dimension chain based on sampled data of the constituent ring obtained by sampling from the sampled data set of the constituent ring each time, to obtain the gap value distribution interval when the to-be-mounted component and the mounted component are assembled.

7. The method according to claim 1, wherein the determining, by the electronic device based on the gap value distribution interval, whether there is the interference when the to-be-mounted component and the mounted component are assembled comprises:

determining, by the electronic device, whether there is a gap value less than 0 in the gap value distribution interval;

if there is the gap value less than 0 in the gap value distribution interval, determining that there is the interference when the to-be-mounted component and the mounted component are assembled; or

if there is no gap value less than 0 in the gap value distribution interval, determining that there is no interference when the to-be-mounted component and the mounted component are assembled.

8. The method according to claim 1, wherein after the determining, by the electronic device based on the gap value distribution interval, whether there is the interference when the to-be-mounted component and the mounted component are assembled, the method further comprises:

if there is the interference when the to-be-mounted component and the mounted component are assembled, calculating, by the electronic device, contribution degrees of constituent rings in the three-dimensional tolerance dimension chain; and

adjusting, by the electronic device, a tolerance of the constituent ring in the three-dimensional tolerance dimension chain based on the contribution degree, until it is determined, based on an adjusted three-dimensional tolerance dimension chain and the coordinates of a high-risk assembly position, that there is no interference when the to-be-mounted component and the mounted component are assembled.

9. The method according to claim 8, wherein the calculating, by the electronic device, contribution degrees of constituent rings in the three-dimensional tolerance dimension chain comprises:

calculating, by the electronic device, contribution degrees of constituent rings in the three-dimensional tolerance dimension chain in a first direction by using a calculation formula of a contribution degree below, wherein

$$Cx_i = \frac{\left(\frac{\partial U}{\partial x_i} \times \sigma_{x_i}\right)^2}{\sigma_u^2}$$

$Cx_i$: represents a contribution degree of an $i^{th}$ constituent ring in the first direction, $x_i$ represents the $i^{th}$ constituent ring in the first direction, U represents a closed ring in the three-dimensional tolerance dimension chain, wherein the closed ring is a gap formed when the to-be-mounted component and the mounted component are assembled, $\sigma_{x_i}$ represents a standard deviation of the $i^{th}$ constituent ring in the first direction, and $\sigma_u$ represents a standard deviation of the closed ring.

10. The method according to claim 8, wherein the adjusting, by the electronic device, a tolerance of the constituent ring in the three-dimensional tolerance dimension chain based on the contribution degree comprises:
adjusting, by the electronic device based on a sequence of contribution degrees of constituent rings in a same direction from high to low, a tolerance of at least one constituent ring ranking top in the three-dimensional tolerance dimension chain.

11. The method according to claim 8, wherein after the adjusting, by the electronic device, a tolerance of the constituent ring in the three-dimensional tolerance dimension chain based on the contribution degree, until it is determined, based on an adjusted three-dimensional tolerance dimension chain and the coordinates of a high-risk assembly position, that there is no interference when the to-be-mounted component and the mounted component are assembled, the method further comprises:
outputting, by the electronic device, tolerances of constituent rings in a finally adjusted three-dimensional tolerance dimension chain.

12. The method according to claim 1, wherein after the determining, by the electronic device based on the gap value distribution interval, whether there is the interference when the to-be-mounted component and the mounted component are assembled, the method further comprises:
if there is no interference when the to-be-mounted component and the mounted component are assembled, outputting, by the electronic device, prompt information that tolerances of constituent rings in the three-dimensional tolerance dimension chain meet a requirement.

13. The method according to any one of claims 1 to 12, wherein the to-be-mounted component is a front camera in a terminal device, and the mounted component is a screen in the terminal device.

14. An electronic device, comprising a memory and a processor, wherein the memory is configured to store a computer program, and the processor is configured to invoke the computer program, to perform the assembly verification method according to any one of claims 1 to 13.

15. A computer-readable storage medium, wherein the computer-readable storage medium stores a computer program or instructions, and when the computer program or the instructions are run, the assembly verification method according to any one of claims 1 to 13 is implemented.

16. An assembly verification method, applied to an electronic device, wherein the method comprises:

obtaining, by the electronic device, a three-dimensional tolerance dimension chain of a to-be-mounted component and a mounted component;
determining, by the electronic device, coordinates of a high-risk assembly position of each test point in the to-be-mounted component when the to-be-mounted component and the mounted component are assembled;
determining, by the electronic device based on the three-dimensional tolerance dimension chain and the coordinates of a high-risk assembly position of each test point in the to-be-mounted component, a gap value distribution interval when the to-be-mounted component and the mounted component are assembled; and

the determining, by the electronic device based on the gap value distribution interval, whether there is an interference when the to-be-mounted component and the mounted component are assembled; and

the determining, by the electronic device, coordinates of a high-risk assembly position of each test point in the to-be-mounted component when the to-be-mounted component and the mounted component are assembled comprises:

    calculating, by the electronic device, a minimum nominal gap value between each test point in the to-be-mounted component and the mounted component when the to-be-mounted component and the mounted component are assembled; and
    determining, by the electronic device, the coordinates of a high-risk assembly position of the test point based on the minimum nominal gap value.

17. The method according to claim 16, wherein the calculating, by the electronic device, a minimum nominal gap value between each test point in the to-be-mounted component and the mounted component when the to-be-mounted component and the mounted component are assembled comprises:

    determining, by the electronic device, a first coordinate value of the test point in a first direction and a second coordinate value of the test point in a second direction when the to-be-mounted component and the mounted component are assembled;
    detecting, by the electronic device, a third coordinate value of the test point in a third direction at a different tilt angle when the to-be-mounted component rotates;
    determining, by the electronic device, a nominal gap value between the test point at the different tilt angle and the mounted component based on the first coordinate value, the second coordinate value, and the third coordinate value; and
    determining, by the electronic device, a minimum value of the nominal gap value of the test point at the different tilt angle as the minimum nominal gap value between the test point and the mounted component; and
    the determining, by the electronic device, a nominal gap value between the test point at the different tilt angle and the mounted component based on the first coordinate value, the second coordinate value, and the third coordinate value comprises:

    determining, by the electronic device, based on the first coordinate value, the second coordinate value, and the third coordinate value, a first projection gap in the first direction, a second projection gap in the second direction, and a third projection gap in the third direction, between the test point at the different tilt angle and the mounted component; and
    calculating, by the electronic device, a square root of a sum of squares of the first projection gap, the second projection gap, and the third projection gap, to obtain the nominal gap value between the test point at the different tilt angle and the mounted component.

18. The method according to claim 17, wherein the determining, by the electronic device, the coordinates of a high-risk assembly position of the test point based on the minimum nominal gap value comprises:
determining, by the electronic device, the coordinates of a high-risk assembly position of the test point based on the first coordinate value, the second coordinate value, and a third coordinate value corresponding to the minimum nominal gap value.

19. The method according to claim 16, wherein the determining, by the electronic device based on the three-dimensional tolerance dimension chain and the coordinates of a high-risk assembly position of each test point in the to-be-mounted component, a gap value distribution interval when the to-be-mounted component and the mounted component are assembled comprises:

    obtaining, by the electronic device, a tolerance of a target constituent ring corresponding to each test point in the to-be-mounted component, wherein the target constituent ring is a constituent ring in a plurality of constituent rings comprised in the three-dimensional tolerance dimension chain;
    generating, by the electronic device, a sampled data set of the constituent ring based on the coordinates of a high-risk assembly position of each test point and the tolerance of the target constituent ring; and
    solving, by the electronic device, the three-dimensional tolerance dimension chain based on sampled data of the constituent ring obtained by sampling from the sampled data set of the constituent ring each time, to obtain the gap value distribution interval when the to-be-mounted component and the mounted component are assembled.

**20.** The method according to claim 16, wherein the determining, by the electronic device based on the gap value distribution interval, whether there is the interference when the to-be-mounted component and the mounted component are assembled comprises:

determining, by the electronic device, whether there is a gap value less than 0 in the gap value distribution interval;

if there is the gap value less than 0 in the gap value distribution interval, determining that there is the interference when the to-be-mounted component and the mounted component are assembled; or

if there is no gap value less than 0 in the gap value distribution interval, determining that there is no interference when the to-be-mounted component and the mounted component are assembled.

**21.** The method according to claim 16, wherein after the determining, by the electronic device based on the gap value distribution interval, whether there is the interference when the to-be-mounted component and the mounted component are assembled, the method further comprises:

if there is the interference when the to-be-mounted component and the mounted component are assembled, calculating, by the electronic device, contribution degrees of constituent rings in the three-dimensional tolerance dimension chain; and

adjusting, by the electronic device, a tolerance of the constituent ring in the three-dimensional tolerance dimension chain based on the contribution degree, until it is determined, based on an adjusted three-dimensional tolerance dimension chain and the coordinates of a high-risk assembly position, that there is no interference when the to-be-mounted component and the mounted component are assembled.

**22.** The method according to claim 21, wherein the calculating, by the electronic device, contribution degrees of constituent rings in the three-dimensional tolerance dimension chain comprises:

calculating, by the electronic device, contribution degrees of constituent rings in the three-dimensional tolerance dimension chain in a first direction by using a calculation formula of a contribution degree below, wherein

$$Cx_i = \frac{\left(\frac{\partial U}{\partial x_i} \times \sigma_{x_i}\right)^2}{\sigma_u^2}$$

$Cx_i$ represents a contribution degree of an $i^{th}$ constituent ring in the first direction, $x_i$ represents the $i^{th}$ constituent ring in the first direction, U represents a closed ring in the three-dimensional tolerance dimension chain, wherein the closed ring is a gap formed when the to-be-mounted component and the mounted component are assembled, $\sigma_{x_i}$ represents a standard deviation of the $i^{th}$ constituent ring in the first direction, and $\sigma_u$ represents a standard deviation of the closed ring.

**23.** The method according to claim 21, wherein the adjusting, by the electronic device, a tolerance of the constituent ring in the three-dimensional tolerance dimension chain based on the contribution degree comprises:

adjusting, by the electronic device based on a sequence of contribution degrees of constituent rings in a same direction from high to low, a tolerance of at least one constituent ring ranking top in the three-dimensional tolerance dimension chain.

**24.** The method according to claim 21, wherein after the adjusting, by the electronic device, a tolerance of the constituent ring in the three-dimensional tolerance dimension chain based on the contribution degree, until it is determined, based on an adjusted three-dimensional tolerance dimension chain and the coordinates of a high-risk assembly position, that there is no interference when the to-be-mounted component and the mounted component are assembled, the method further comprises:

outputting, by the electronic device, tolerances of constituent rings in a finally adjusted three-dimensional tolerance dimension chain.

**25.** The method according to claim 16, wherein after the determining, by the electronic device based on the gap value distribution interval, whether there is the interference when the to-be-mounted component and the mounted component are assembled, the method further comprises:

if there is no interference when the to-be-mounted component and the mounted component are assembled, outputting, by the electronic device, prompt information that tolerances of constituent rings in the three-dimensional tolerance dimension chain meet a requirement.

**26.** The method according to any one of claims 16 to 25, wherein the to-be-mounted component is a front camera in a terminal device, and the mounted component is a screen in the terminal device.

Front camera 102

Support 103

Support 103

Screen 101

Screen 101

Glass cover plate 104

105

FIG. 1

102

21   102

(a)

(b)

FIG. 2

An electronic device obtains a three-dimensional tolerance dimension chain of a to-be-mounted component and a mounted component — 301

The electronic device determines coordinates of a high-risk assembly position of each test point in the to-be-mounted component when the to-be-mounted component and the mounted component are assembled — 302

The electronic device determines, based on the three-dimensional tolerance dimension chain and the coordinates of a high-risk assembly position of each test point in the to-be-mounted component, a gap value distribution interval when the to-be-mounted component and the mounted component are assembled — 303

The electronic device determines, based on the gap value distribution interval, whether there is an interference when the to-be-mounted component and the mounted component are assembled — 304

NO

Yes

The electronic device calculates contribution degrees of constituent rings in the three-dimensional tolerance dimension chain — 305

The electronic device adjusts a tolerance of the constituent ring in the three-dimensional tolerance dimension chain based on the contribution degree — 306

The electronic device outputs a corresponding result — 307

FIG. 3

An electronic device obtains a tolerance of a target constituent ring corresponding to each test point in a to-be-mounted component, where the target constituent ring is a constituent ring in a plurality of constituent rings included in a three-dimensional tolerance dimension chain ⌐ 3031

The electronic device generates a sampling data set of the constituent ring based on coordinates of a high-risk assembly position of each test point and the tolerance of the target constituent ring ⌐ 3032

The electronic device performs random sampling on the sampling data set of the constituent ring, to obtain a set of sampling data of the constituent ring ⌐ 3033

The electronic device solves the three-dimensional tolerance dimension chain based on the set of sampling data of the constituent ring obtained by sampling, to obtain a gap value when the to-be-mounted component and the mounted component are assembled ⌐ 3034

The electronic device determines whether the number of times of simulations reaches a predetermined number of times K ⌐ 3035

NO

Yes

Count gap values, obtained by simulation for K times, when the to-be-mounted component and the mounted component are assembled, to obtain a gap value distribution interval when the to-be-mounted component and the mounted component are assembled ⌐ 3036

FIG. 4

500

Electronic device

502

Processor

501

Memory

503

Communication
interface

FIG. 5

## INTERNATIONAL SEARCH REPORT

| | International application No. |
|---|---|
| | **PCT/CN2023/091983** |

| **A.** | **CLASSIFICATION OF SUBJECT MATTER** |
|---|---|
| | G06F 30/20(2020.01)i |

According to International Patent Classification (IPC) or to both national classification and IPC

| **B.** | **FIELDS SEARCHED** |
|---|---|

Minimum documentation searched (classification system followed by classification symbols)

  IPC:G06F

Documentation searched other than minimum documentation to the extent that such documents are included in the fields searched

Electronic data base consulted during the international search (name of data base and, where practicable, search terms used)

  CNKI, CNTXT, DWPI, ENTXT, ENTXTC: 安装, 仿真, 干涉, 公差, 刮蹭, 间隙, 碰撞, 虚拟, 验证, 装配, 组装, assembly, interference, scratch, simulation, verification, virtual, gap, tolerance

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | CN 114781197 A (SHENZHEN RONGYAO INTELLIGENT MACHINE CO., LTD.) 22 July 2022 (2022-07-22)<br>  description, paragraphs 5-132 | 1-26 |
| A | CN 111931340 A (CHONGQING CHENGZHIPENG TECHNOLOGY CO., LTD.) 13 November 2020 (2020-11-13)<br>  entire document | 1-26 |
| A | CN 113391598 A (HARBIN INSTITUTE OF TECHNOLOGY et al.) 14 September 2021 (2021-09-14)<br>  entire document | 1-26 |
| A | CN 113435100 A (WANG HAINING) 24 September 2021 (2021-09-24)<br>  entire document | 1-26 |
| A | JP 2013029931 A (MAZDA MOTOR CORPORATION) 07 February 2013 (2013-02-07)<br>  entire document | 1-26 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 June 2023** | **07 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/091983**

| Patent document cited in search report | | | Publication date (day/month/year) | Patent family member(s) | | | Publication date (day/month/year) |
|---|---|---|---|---|---|---|---|
| CN | 114781197 | A | 22 July 2022 | CN | 114781197 | B | 01 November 2022 |
| CN | 111931340 | A | 13 November 2020 | | None | | |
| CN | 113391598 | A | 14 September 2021 | CN | 113391598 | B | 20 September 2022 |
| CN | 113435100 | A | 24 September 2021 | CN | 113435100 | B | 17 May 2022 |
| JP | 2013029931 | A | 07 February 2013 | JP | 5834589 | B2 | 24 December 2015 |

Form PCT/ISA/210 (patent family annex) (July 2022)

**REFERENCES CITED IN THE DESCRIPTION**

**Patent documents cited in the description**

- CN 202210700956